(19) **Europäisches Patentamt**

**European Patent Office**

**Office européen des brevets**

(11) **EP 1 376 085 A2**

(12) **EUROPÄISCHE PATENTANMELDUNG**

(43) Veröffentlichungstag:
**02.01.2004 Patentblatt 2004/01**

(51) Int Cl.⁷: **G01L 1/22**

(21) Anmeldenummer: **03014718.5**

(22) Anmeldetag: **27.06.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **28.06.2002 DE 10228951**

(71) Anmelder: **Hottinger Baldwin Messtechnik GmbH 64293 Darmstadt (DE)**

(72) Erfinder:
• **Burfeindt, Helmut**
  **64380 Rossdorf (DE)**
• **Kleckers, Thomas**
  **64347 Griesheim (DE)**

(74) Vertreter: **Behrens, Helmut, Dipl.-Ing. Gross-Gerauer Weg 55 64295 Darmstadt (DE)**

(54) **Dehnungsmessstreifen- Ketten**

(57) Die Erfindung betrifft Dehnungsmeßstreifen-Ketten bei denen mindestens zehn parallel zueinander und längs eines Trägermaterials (6) angeordnete Meßgitter (2,13) vorgesehen sind, die auf einer Seite der Kettenlängsachse (5) jeweils mindestens zehn Lötstützpunkte (4) aufweisen, die über jeweils einen Zuleitungssteg (14) unterschiedlicher Breite mit den Meßgittern (2,13) verbunden sind. Auf der anderen Seite der Kettenlängsachse (5) sind ebenfalls Zuleitungsstege (8,9) unterschiedlicher Breite vorgesehen, die mit einem gemeinsamen Längsstreifen (12) verbunden sind, der vor dem ersten Lötstützpunkt (4) des ersten Meßgitters (2) endet und dort einen gemeinsamen Lötstützpunkt (10) bildet. Dabei sind die Zuleitungsstegbreiten entsprechend der Leitungslänge so vergrößert, daß alle Meßgitter (2,13) und deren Zuführungsleitungen (8,9,12,14) über den gleichen Widerstandswert verfügen, der insgesamt dem Nennwiderstandswert $R_0$ entspricht.

(Fig. 1)

EP 1 376 085 A2

**Beschreibung**

Die Erfindung betrifft Dehnungsmeßstreifen-Ketten gemäß dem Oberbegriff des Patentanspruchs 1.

Dehnungsmeßstreifen werden für vielfältige Meßzwecke eingesetzt, wobei sie im Grunde die Dehnung eines Körpers erfassen, der das Meßobjekt darstellt oder mit einem Meßobjekt in Verbindung steht. Dabei gibt es eine Vielzahl unterschiedlicher Dehnungsmeßstreifen mit verschiedenen Meßgitterausprägungen oder -anordnungen, die für unterschiedliche Meßzwecke eingesetzt werden.

Aus der Firmendruckschrift "Dehnungsmeßstreifen und Zubehör", G 24.01.9, der Firma Hottinger Baldwin Meßtechnik in Darmstadt, Ausgabe April 1999, Seite 25, sind Dehnungsmeßstreifen-Ketten bekannt, bei denen auf einem Meßgitterträger zehn einzelne Meßgitter und ein Kompensationsgitter aufgebracht sind. Diese Meßgitter sind parallel oder senkrecht zu einer Kettenlängsachse angeordnet und mit jeweils zwei seitlichen Lötstützpunkten versehen. Dabei besitzen die einzelnen Dehnungsmeßstreifen einen Widerstandswert von 120 Ohm und sind für eine maximale Brückenspeisespannung von 1,5 bis 5 Volt vorgesehen. Derartige Ketten von zehn Meßgittern sind auf Meßgitterträgern von 7 bis 14 mm Breite und 14 bis 44 mm Länge angeordnet und werden meist zur Messung von Dehnungsverläufen oder Dehnungsunterschieden an Meßobjekten eingesetzt. Da die Meßgitterabstände nur wenige Millimeter betragen, können Dehnungsunterschiede zwischen ihnen nur präzise festgestellt werden, wenn auch die Meßgenauigkeit entsprechend groß ist. Die Auswertung der Dehnungsmessungen erfolgt durch Wheatston'sche Meßbrückenschaltungen, bei denen die einzelnen Dehnungsmeßstreifen als Viertelbrücke geschaltet sind, so daß sich die Dehnung aus dem Verhältnis der Widerstandsänderung zum Nennwiderstand unter Berücksichtigung eines Proportionalitätsfaktors ergibt. Da derartige Ketten mit Meßgittern heute meist fotochemisch aus einer hauchdünnen Metallfolie eines Widerstandsmaterials vollautomatisch geätzt werden, ist sichergestellt, daß alle Meßgitter nahezu identisch sind, so daß auch Dehnungsänderungen im Bereich von wenigen µm/m erfaßt werden können. Derartige Ketten werden vielfach bei Materialprüfungen an belasteten Bauteilen eingesetzt, wobei insbesondere im Flugzeugbau oft einige tausend Meßstellen vorgesehen sind, die insbesondere bei der Beschaltung von 20 Lötstützpunkten pro Kette einen hohen manuellen Arbeitsaufwand erfordern.

Zur Verringerung des Lötaufwands sind deshalb auch Dehnungsmeßstreifenketten bekannt, bei denen nur 11 Lötstützpunkte bei 10 Meßgittern beschaltet werden müssen. Bei diesen Dehnungsmeßstreifen-Ketten sind die Lötstützpunkte aller 10 Meßgitter auf einer Seite der Kettenlängsachse intern miteinander verschaltet und auf die andere Seite der Kettenlängsachse als 11. Lötstützpunkt zurückgeführt. Dadurch entstehen auf der Dehnungsmeßstreifenkette unterschiedlich lange Stromführungswege und damit auch geringfügig unterschiedliche Widerstandswerte, die entlang der Kettenlängsachse zu- oder abnehmen. Da mit diesen Meßketten die Dehnungsunterschiede in Abständen von bis zu 1 mm gemessen werden sollen, deren Empfindlichkeit wenige µm/m beträgt, können durch diese Zuleitungsunterschiede Meßfehler von bis zu 5% auftreten, die für hochgenaue Meßaufgaben häufig nicht vertretbar sind.

Der Erfindung liegt deshalb die Aufgabe zugrunde, eine Dehnungsmeßstreifen-Kette der eingangs genannten Art so zu verbessern, daß bei möglichst geringem Lötaufwand die Meßgenauigkeit der Dehnungsmeßstreifen-Ketten verbessert wird.

Die Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß auch bei geringst möglichem Lötaufwand alle Dehnungsmeßstreifen einer Kette die gleichen elektrischen Werte aufweisen, so daß bei einer Verschaltung als Wheatston'sche Meßbrücke alle Meßbrücken einer Kette alle die gleiche Empfindlichkeit aufweisen. Weiterhin sind durch die Anpassung der Zuleitungsquerschnitte an die internen Verdrahtungslängen auch sehr lange Dehnungsmeßstreifen-Ketten mit einer Vielzahl von Meßgittern realisierbar, ohne daß sich hierdurch die Meßgenauigkeit und die Empfindlichkeit der Messung innerhalb der Kette verändert.

Bei einer besonderen Ausführungsart der Erfindung, bei der die Querschnittsanpassung durch eine kontinuierliche Verbreiterung der Zuleitungsstege erreicht wird, hat den Vorteil, daß sich die Gesamtfläche der Dehnungsmeßstreifen-Meßkette nicht vergrößert und die Herstellung auf einfache Art und Weise lediglich durch eine Verringerung der abzuätzenden Widerstandsfolie erreichbar ist.

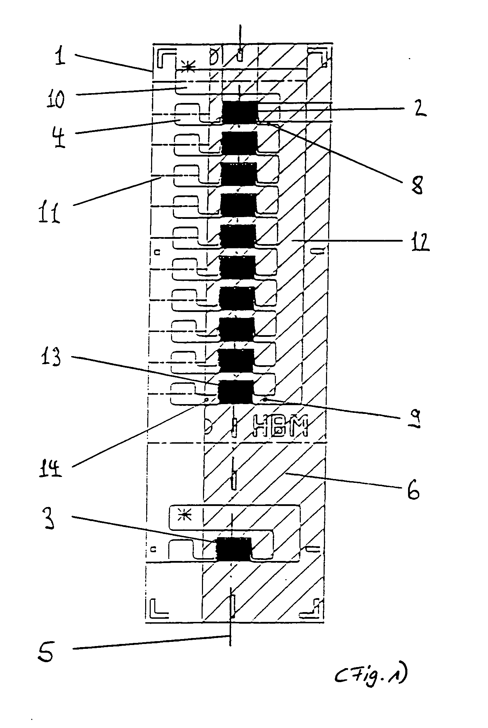

Die Erfindung wird anhand eines Ausführungsbeispiels, das in der Zeichnung dargestellt ist, näher erläutert. Die Zeichnung zeigt eine Dehnungsmeßstreifen-Kette 1 mit zehn Meßgittern 2, 13 und einem Kompensationsgitter 3, wobei die zehn Meßgitter 2, 13 mit elf Lötstützpunkten 4, 10 verbunden sind, wobei die internen Anschlußverdrahtungen exakt den gleichen Widerstandswert aufweisen.

Die Dehnungsmeßstreifen-Kette 1 besteht aus zehn parallel und längs zur Kettenlängsachse 5 angeordneten Meßgittern 2,13 und einem weiteren parallelen Kompensationsgitter 3. Alle Meß-2,13 und Kompensationsgitter 3 bestehen aus einer Widerstandsfolie aus vorzugsweise Konstantan, die auf einer flexiblen Trägerfolie 6 als Trägerkörper aufgebracht und dann in fotolithographischen Verfahren geätzt wird. Diese Meß-2,13 und Kompensationsgitter 3 sind mäanderförmig ausgebildet und seitlich mit zwei orthogonal zur Kettenlängsachse 5 verlaufenden Zuleistungsstegen 8,9,14 mit den Lötstützpunkten 4,10 verbunden. Dabei sind alle Lötstützpunkte 4,10 nach einer Seite zur Kettenlängsachse 5 herausgeführt, wobei jedes Meßgitter 2,13 über einen separaten 4 und einen gemeinsamen Lötstützpunkt 10 verfügt. Die mäanderförmigen Meßgitterpfade verlaufen in vorliegendem Ausführungsbeispiel parallel zur Kettenlängsachse 5 können aber auch orthogonal hierzu oder in einem anderen Winkel angeordnet sein. Es ist weiterhin auch denkbar, daß auf einer Dehnungsmeßstreifen-Kette 1 Meßgitter 2,13 in unterschiedlicher Ausrichtung zur Kettenlängsrichtung 5 angeordnet sind.

Der gemeinsame Lötstützpunkt 10 aller zehn Meßgitter 2,13 ist als verhältnismäßig breiter Streifen 12 aus Widerstandsfolie gebildet, der in einer Richtung parallel zur Kettenlängsachse 5 verläuft und alle Zuleitungsstege 8,9 der Meßgitter 2,13 auf einer Seite der Kettenlängsachse 5 verbindet. Dabei sind sowohl die Meß- 2,13 und Kompensationsgitter 3 als auch die Zuleitungsstege 8,9,14 und die Lötstützpunkte 4,10 aus der gleichen Widerstandsfolie einheitlicher Dicke herausgeätzt. Der parallele Streifen 12 zur Kettenlängsachse 5 knickt vor dem ersten Meßgitter 2 rechtwinklig zur anderen Seite der Kettenlängsachse 5 ab und endet als gemeinsamer Lötstützpunkt 10 vor dem zweiten Lötstützpunkt 4 des ersten Meßgitters 2. Dabei besitzen die Streifen der Lötstützpunkte 4,10 etwa eine Breite von 0,5 mm. Da die interne Zuleitungslänge sich aus der Verdrahtung zwischen dem gemeinsamen Lötstützpunkt 10 und dem jeweiligen zweiten Lötstützpunkt 4 ergibt, sind die Leitungslängen jedes Meßgitters 2,13 unterschiedlich. Will man beispielsweise Dehnungsänderungen oder einen Dehnungsverlauf entlang der Kettenlängsachse 5 mit den Meßgittern 2,13 erfassen, so müssen die Dehnungsänderungen in eine Widerstandsänderung umgewandelt und mit Hilfe einer Weatston'schen Brückenschaltung ausgewertet werden. Wird jedes Meßgitter 2,13 als Viertelbrükke geschaltet, so wird durch eine Dehnung ε in den Meßgittern ein Meßsignal erzeugt, das der Gleichung

$$U = \frac{k}{4} \cdot \varepsilon \cdot U_0$$

entspricht. Dabei ist $U_0$ die Brückenspeisespannung und U die durch die Dehnung ε erzeugte Meßspannung, die durch die Widerstandsänderung ΔR im Meßgitter 2,13 hervorgerufen wird. Die Dehnung ε entspricht dabei der Materialdehnung bezogen auf eine Referenzlänge, die auf die Meßgitter 2,13 wirkt und k stellt einem Proportionalitätsfaktor (Dehnungsempfindlichkeit) zwischen der relativen Widerstandsänderung $\frac{\Delta R}{R_0}$ und der Materialdehnung ε dar, bei der $R_0$ dem Nennwiderstandswert zwischen den beiden zugehörigen Lötstützpunkten 4, 10 entspricht. Der Proportionalitätsfaktor k bzw. k-Faktor, der für jedes Fertigungslos von Dehnungsmeßstreifenketten 1 durch Messung bestimmt wird, besitzt bei derartigen Ketten 1 etwa einen Wert von 2,03.

Bei einer Dehnungsmeßstreifenkette 1 ohne Kompensation der verschiedenen internen Leitungslängen würden die Widerstandswerte aller Meßgitter 2, 13 zwar auch auf einem vorgegebenen Nennwiderstandswert $R_0$ von beispielsweise 120 Ohm durch Materialabtrag der Meßgitterstegdicke abgeglichen, dieser setzt sich dann aber aus verschiedenen Meßgitterwiderständen R und unterschiedlichen Zuleitungswiderstandswerten zusammen. Dadurch wäre dann wegen des geringsten Zuleitungswiderstandes zum ersten Meßgitter 2 dort der größte Meßgitterwiderstand R vorhanden. Wegen des verhältnismäßig langen Zuleitungsweges zum letzten bzw. zehnten Meßgitters 13 würde dies einen kleineren Widerstandswert R aufweisen. Da sich die Empfindlichkeit der Meßschaltung aus der Beziehung $\frac{\Delta R}{R} = k \cdot \varepsilon$ ergibt, wird sich diese bei Meßgittern mit zunehmender interner Verdrahtungslänge verschlechtern, da bei diesen nur ein verringerter aktiver Meßgitterwiderstand R vorhanden ist, der auch nur eine geringere Widerstandsänderung ΔR bei gleichartigen Materialdehnungen bewirkt. Bei zunehmender interner Zuleitungslänge verschlechtert sich gleichzeitig auch die Meßgenauigkeit der Meßbrücke, da diese auf den Nennwiderstandswert $R_0$ bezogen ist. Weicht nun der Nennwiderstand $R_0$ von dem jeweiligen Meßgitterwiderstandswert R ab, der die Meßsignaländerung hervorruft, so entsteht ein Meßfehler.

Dieser Effekt wird durch den k-Faktor von z.B. 2,03 noch verdoppelt, so daß auch schon geringfügige Änderungen der Widerstandsverhältnisse der Kette zu einer nennenswerten Meßwertverfälschung und Empfindlichkeitsabnahme führen. Insbesondere wenn man bedenkt, daß mit derartigen Ketten meist Dehnungsverläufe bzw. Dehnungsänderung an Meßobjekten in einem Abstand von z.B. nur 1 mm erfaßt werden sollen. So besitzt beispielsweise die dargestellte Kette 1 eine Seitenlänge von 12,8 mm auf der zehn Meßstreifen 2 in einem Abstand ihrer Mittellinien 11 von 1 mm angeordnet sind. Mit einer derartigen Kette 1 sollen Dehnungen und Dehnungsunterschiede von wenigen μm/m erfaßt werden, bei denen auch schon geringe elektrische Unterschiede durch die Widerstandsabweichungen der internen Leitungslängen Meßfehler von bis zu 5% bewirken.

Einen derartigen Fehler verhindert die Erfindung dadurch, daß die Zuleitungsstege 8,9,14 zwischen den Meßgittern 2,13 und den Lötstützpunkten 4,10 im Verhältnis zum Abstand zum gemeinsamen Lötstützpunkt verbreitert werden. Da die Zuleitungsstege 8,9,14 und die Lötstützpunkte alle aus einer gleichdicken Widerstandsfolie bestehen, erhöht die Breite im Grunde den Zuleitungsquerschnitt so, daß alle Zuleitungswiderstände zu jedem Meßgitter 2,13 gleich sind. So ist der Steg 8 des ersten Meßgitters 2 ca. 0,1 mm breit, während der Steg 9,14 zu dem zehnten Meßgitter 13 ca. 0,25 mm beträgt. Dadurch verfügen alle Meßgitter 2,13 exakt über den gleichen Widerstandswert R, der inklusive des geringfügigen Anteils der gleichbleibenden Zu-

leitungswiderstandswerte nahezu dem Nennwiderstandswert $R_0$ entspricht. Durch eine derartige Anpassung aller Widerstandswerte an $R_0$ durch eine kontinuierliche Verbreiterung der Stege 8,9,14 in Abhängigkeit der internen Verdrahtungslänge ergibt sich für alle Meßgitter- und Zuleitungswiderstände ein einheitlicher Wert, so daß jede Meßbrücke auch die gleiche Empfindlichkeit und eine gleich hohe Meßgenauigkeit besitzt, was sich insbesondere bei der Messung geringer Dehnungsunterschiede zwischen den Meßgittern 2, 13 als vorteilhaft erwiesen hat.

Eine derartige Anpassung der Querschnittsfläche kann auch nur auf einer Seite der Zuleitungsstege 8,9 erfolgen, während die anderen Stege 14 gleiche Breiten besitzen, wobei die Breitenzunahme dann auf dieser Seite größer zu bemessen wäre. Weiterhin könnte die Querschnittserhöhung auch dadurch erfolgen, daß die Breite des gemeinsamen parallelen Zuführungsstreifen 12 in Abhängigkeit des Abstandes zum gemeinsamen Lötstützpunkt 10 insgesamt kontinuierlich breiter würde.

## Patentansprüche

1.  Dehnungsmeßstreifen-Kette bei der auf einem gemeinsamen Trägerkörper (6) eine vorgegebene Anzahl von mindestens zwei Meßgittern (2,13) angeordnet sind, wobei einer der beiden Anschlußpunkte mehrerer Meßgitter (2,13) intern miteinander verdrahtet ist und einen gemeinsamen Lötstützpunkt (10) aufweist, **dadurch gekennzeichnet, daß** der Querschnitt der Zuführungsleitungen (8,9,12,14) der internen Verdrahtung von den Lötstützpunkten (10,4) zu den Meßgittern (2,13) im Verhältnis zu dessen Länge ansteigt.

2.  Dehnungsmeßstreifen-Kette nach Anspruch 1, **dadurch gekennzeichnet, daß** mindestens 10 parallel zueinander und längs eines Trägermaterials (6) angeordnete Meßgitter (2,13) vorgesehen sind, die auf einer Seite der Kettenlängsachse (5) jeweils mindestens 11 Lötstützpunkte (4) aufweisen, die über jeweils einen Zuleitungssteg (14) unterschiedlicher Breite mit den Meßgittern (2,13) verbunden sind und auf der anderen Seite der Kettenlängsachse (5) ebenfalls Zuleitungsstege (8,9) unterschiedlicher Breite aufweisen, die mit einem gemeinsamen Längsstreifen (12) verbunden sind, der vor dem ersten Lötstützpunkt (4) des ersten Meßgitters (2) endet und dort einen gemeinsamen Lötstützpunkt (10) bildet, wobei die Zuleitungsstegbreite entsprechend der Leitungslänge so vergrößert ist, daß alle Meßgitter (2,13) incl. der Zuleitungswiderstände zwischen den ihnen zugeordneten Lötstützpunkten (4,10) exakt den gleichen Meßgitterwiderstandswert R und den gleichen Nennwiderstandswert $R_0$ aufweisen.

(Fig. 1)